# FASCICULE DE BREVET EUROPEEN

(11) **EP 1 571 068 B1**
(45) Date de publication et mention de la délivrance du brevet: **20.12.2006**
(21) Numéro de dépôt: 05300149.1
(22) Date de dépôt: 25.02.2005
(51) Int. Cl.: B62D 25/08, B60S 1/04

(54) **Dispositif pour cacher et proteger les balais d'essuie-glace d'un véhicule automobile en position inactive**
Vorrichtung zur Schutz und Lagerung eines Scheibenwischers des Kraftfahrzeuges in inaktiven Zustand
Device for protection and storage for a windshield wiper of a vehicle in inactive state

(30) Priorité: 05.03.2004 FR 0402310
(43) Date de publication de la demande: 07.09.2005
(73) Titulaire: Peugeot Citroën Automobiles S.A., 78140 Vélizy Villacoublay (FR)
(72) Inventeur: Jeuffe, Gérard, 78810 Feucherolles (FR)
(74) Mandataire: Fernandez, Francis Lionel

(56) Documents cités:
- DE-A- 19 547 197
- GB-A- 721 465
- US-A1- 2002 167 288
- PATENT ABSTRACTS OF JAPAN vol. 0183, no. 48 (M-1630), 30 juin 1994 (1994-06-30) & JP 06 087408 A (MAZDA MOTOR CORP), 29 mars 1994 (1994-03-29)
- PATENT ABSTRACTS OF JAPAN vol. 0171, no. 06 (M-1375), 4 mars 1993 (1993-03-04) & JP 04 297355 A (MAZDA MOTOR CORP), 21 octobre 1992 (1992-10-21)

## Description

La présente invention est relative à un dispositif pour cacher les balais d'essuie glace d'un véhicule automobile en position inactive de ces balais, notamment en les disposant au repos contre les montants latéraux de la baie ménagée dans la carrosserie du véhicule prévue pour le montage dans celle-ci de la vitre du pare-brise avant ou de la lunette arrière.

Les balais d'essuie glace d'un véhicule automobile, que ces balais soient au nombre de deux avec des débattements imbriqués de l'un vis-à-vis de l'autre, ou bien que le véhicule ne comporte qu'un balai unique à déplacement linéaire ou articulé autour d'un axe sensiblement central sur la carrosserie pour balayer à lui seul la quasi totalité de la vitre, sont le plus souvent disposés, dans leur position de repos qui représente plus de 95 % du temps, où leur mouvement d'oscillation devant le pare-brise pour essuyer l'eau de pluie ruisselant sur celui-ci n'est pas commandé, dans la partie inférieure de ce pare-brise, entre le bas de la vitre de celui-ci et le bord du capot ou de la carrosserie qui s'étend à proximité, ces balais n'étant dans cette position que partiellement escamotés derrière et sous ce capot.

Ils sont en particulier apparents au moins en partie de l'extérieur et au-dessus de l'arête du capot, en se situant ainsi dans le champ de vision du conducteur, ce qui présente déjà un inconvénient. En outre, ces balais ne sont pas protégés vis-à-vis du gel, de la pollution et du rayonnement ultraviolet du soleil, ce qui peut plus ou moins rapidement dégrader la qualité de l'essuyage et affecter leur durée de vie.

On a déjà prévu, notamment dans les brevets français FR-2 708 543 et 2 710 600, ou encore par la demande PCT WO 01/68421, voire par le brevet allemand DE-719 907 390, des solutions où la commande des balais d'essuie glace d'un véhicule automobile est aménagée de sorte que, lorsque ces balais ne sont pas en service, ils se disposent respectivement l'un à droite et l'autre à gauche du pare-brise, sensiblement parallèlement aux montants latéraux de la carrosserie dans l'ouverture de la baie recevant la vitre du pare-brise ou de la lunette arrière, contre les côtés de celle-ci, en se plaçant en outre sous des gouttières de protection qui débordent légèrement de ces montants au-dessus des bords correspondants de la vitre, de sorte que ces balais sont normalement cachés et protégés au moins en partie des agressions précitées.

Des dispositions annexes ont également été prévues pour que ces balais, lorsqu'ils sont amenés sous la gouttière de protection, soient légèrement écartés de la surface de la vitre afin qu'ils ne subissent pas une déformation permanente au repos, due à l'éventuelle courbure de la vitre et à leur contact avec celle-ci.

Mais ces solutions ne sont pas totalement satisfaisantes, en particulier parce qu'elles n'assurent pas une protection optimale des balais dans leur position de repos sous la gouttière, notamment parce qu'ils restent en contact permanent avec l'atmosphère extérieure à travers l'ouverture nécessairement prévue entre cette gouttière et la vitre du pare-brise pour le passage des balais, de sorte que les divers agents extérieurs mentionnés plus haut peuvent encore les dégrader.

La présente invention est relative à un dispositif qui apporte un perfectionnement particulièrement avantageux aux solutions antérieurement proposées, en permettant, lorsque les balais d'essuie glace sont amenés sous les gouttières parallèles aux montants latéraux de la carrosserie qui bordent la vitre du pare-brise ou de la lunette arrière, de fermer complètement les logements où ces balais sont disposés en les isolant de l'atmosphère extérieure, la commande du moteur qui de façon classique entraîne le mouvement d'oscillation de ces balais pour assurer l'essuyage de la vitre provoquant automatiquement l'ouverture de ces logements et la libre sortie de ces balais afin de permettre leur fonctionnement aussi longtemps que cette commande est active.

Lors de l'arrêt de l'essuie glace, le retour des balais en position de repos sous leurs gouttières, amène ceux-ci dans leurs logements qui se referment derrière eux, en les isolant à nouveau.

A cet effet, le dispositif considéré, destiné à cacher et protéger au moins un balai d'essuie glace d'un véhicule automobile, placé en position de repos dans un logement ménagé le long d'un montant latéral de la carrosserie entourant la vitre du pare-brise avant ou de la lunette arrière de ce véhicule, ce logement étant délimité par une gouttière fixe qui s'étend sensiblement parallèlement à la vitre à partir du montant, et comportant une ouverture comprise entre la gouttière et la vitre pour la pénétration ou la sortie du balai dans le logement, respectivement en position de repos ou de commande de l'essuie glace, se caractérise en ce qu'il comporte un volet basculant, articulé autour d'un axe fixe porté par la carrosserie, pivotant entre une première position où il s'étend devant l'ouverture du logement ménagé sous la gouttière en isolant celui-ci de l'extérieur, et une seconde position où il se dispose approximativement parallèlement à la gouttière en libérant l'ouverture afin de laisser le libre passage au balai d'essuie glace lorsque celui-ci est commandé pour assurer par oscillations successives l'essuyage de la vitre, ce volet basculant, soumis en permanence à l'action d'un ressort qui le maintient dans l'une ou l'autre de ces deux positions, comprenant un bras de rappel sur lequel agit directement le balai à l'encontre du ressort pour faire passer ce volet de l'une à l'autre de ces positions, respectivement lors de la sortie du balai hors du logement et de son retour dans celui-ci.

Selon une caractéristique particulière, l'axe d'articulation du bras de rappel du volet basculant, porté par la carrosserie, s'étend parallèlement à la gouttière.

De préférence, l'axe d'articulation du bras de rappel du volet basculant tourillonne sur deux paliers disposés aux extrémités opposées du logement.

Selon une autre caractéristique, le bras de rappel du volet basculant présente un profil en S, dont une extrémité est solidaire de ce volet.

Avantageusement, le bras de rappel porte à son extrémité opposée à celle qui est solidaire du volet basculant, un galet en un matériau élastomère repoussé par le balai d'essuie glace lors de son retour à l'intérieur du logement, le pivotement du bras de rappel autour de son axe d'articulation sous l'effet du ressort assurant la fermeture du logement par le volet basculant.

Selon encore une autre caractéristique, le volet basculant comporte en bout un joint d'étanchéité à lèvre, propre à s'appliquer sur la vitre lorsque ce volet ferme le logement.

Dans un mode de réalisation préféré de l'invention, le ressort de rappel est un ressort à spirale, dont une extrémité est fixée à la gouttière en un point situé à l'intérieur du logement et l'autre extrémité au bras de rappel en un point décalé latéralement vis-à-vis de l'axe d'articulation de ce bras, de manière à créer deux positions d'équilibre pour le volet basculant selon qu'il ouvre ou ferme le logement sous la poussée du balai.

D'autres caractéristiques d'un dispositif pour cacher et protéger un balai d'essuie glace de véhicule automobile apparaîtront encore à travers la description qui suit d'un exemple de réalisation, donné à titre indicatif, et non limitatif, en référence aux dessins annexés sur lesquels :
- La Figure 1 illustre schématiquement une vue de face du pare-brise avant d'un véhicule automobile équipé d'un dispositif conforme à l'invention.
- La Figure 2 est une vue en coupe transversale, à plus grande échelle, d'une des gouttières et du logement correspondant prévus dans ce dispositif, selon la ligne II-II de la Figure 1.
- Les Figures 3 et 4 sont des vues schématiques, à encore plus grande échelle, permettant de préciser la cinématique du fonctionnement du dispositif considéré.
- La Figure 5 est une vue en coupe, à encore plus grande échelle, illustrant avec plus de détails les diverses parties de ce dispositif.

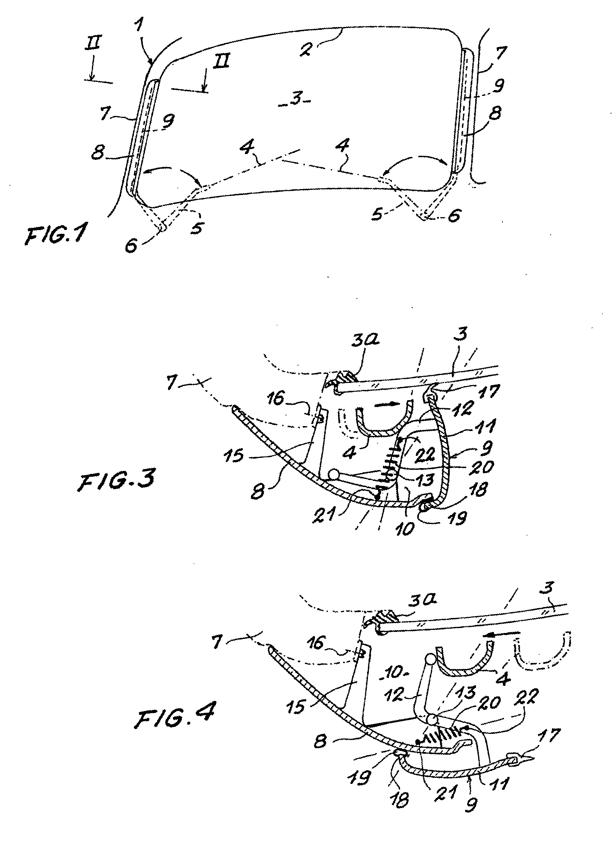

Sur la Figure 1, la référence 1 désigne la partie avant d'une carrosserie d'un véhicule automobile, en particulier dans la partie de celle-ci, située vers l'avant, qui comporte une baie 2 à l'intérieur de laquelle est montée une vitre 3, constituant dans l'exemple considéré le pare-brise de ce véhicule.

De façon en soi connue, ce pare-brise est associé à deux balais d'essuie glace 4, représentés en traits mixtes sur cette Figure, chacun de ces balais étant monté en bout d'un support 5, qui est lui-même articulé autour d'un axe 6 prévu à la partie inférieure du pare-brise, généralement au voisinage de l'arête du capot (non représenté) qui est monté au-dessus du moteur, en avant du pare-brise.

Les axes 6 des balais 4 sont commandés à partir d'un moteur électrique (également non représenté) et sont animés d'un mouvement de rotation alternatif afin de permettre à ces balais de balayer convenablement la surface du pare-brise avec des mouvements alternés ou imbriqués de l'un et de l'autre, le mécanisme permettant d'assurer et de contrôler ces mouvements étant classique et indifférent en lui-même à l'égard de l'invention de telle sorte qu'il n'est pas besoin de le décrire, ni de le représenter ici.

Dans l'exemple considéré, on suppose que, de manière également connue, lorsque les balais 4 sont en position de repos, l'essuie glace du véhicule étant inactif, ils se disposent, non pas à la partie inférieure de la vitre 3 au voisinage du capot, mais dans une position où ils sont sensiblement parallèles aux montants 7 de la carrosserie 1 qui délimitent les bords latéraux du pare-brise, les balais étant figurés dans cette position en étant schématiquement représentés cette fois avec des traits pointillés.

Dans la solution proposée, les balais 4 ainsi disposés au voisinage des montants 7 en période de non utilisation de l'essuie glace, qui représente la très grande majorité du temps, se logent chacun sous une gouttière fixe 8, portée par le montant 7 correspondant et qui s'étend à partir de celui-ci de façon sensiblement parallèle sur une distance appropriée au-dessus de la vitre 3, de sorte que le balai qui s'engage dans l'ouverture du logement ainsi formé sous cette gouttière soit protégé vis-à-vis de l'extérieur, en particulier grâce à la présence, conformément à l'invention, d'un volet basculant 9 fermant l'ouverture de cette gouttière et propre à coulisser par rapport à celle-ci pour permettre en fonctionnement la sortie du balai et à la fin de son utilisation, son retour dans le logement.

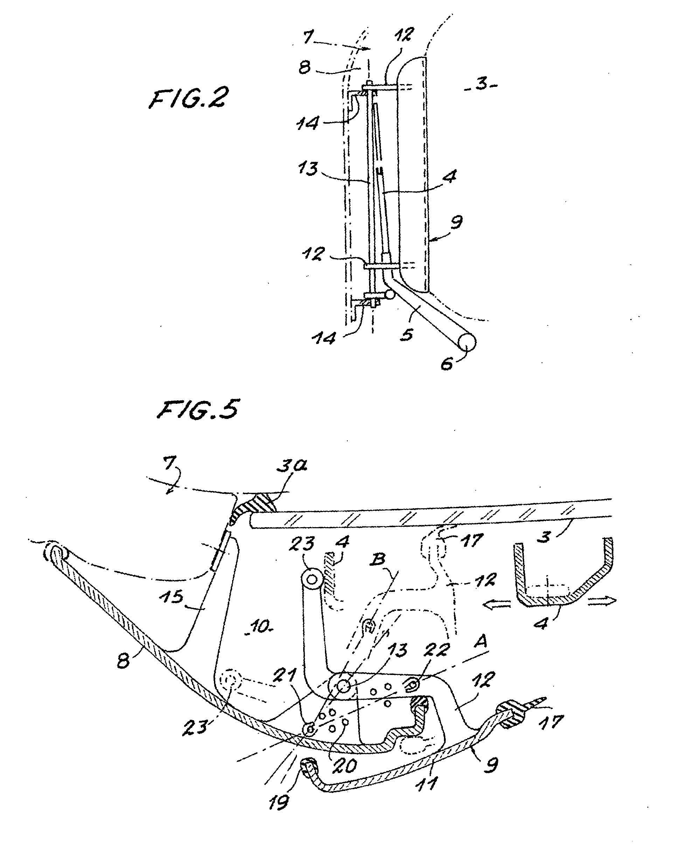

La vue en coupe de la Figure 2 illustre avec plus de détails un des balais 4, son support 5 et son axe d'articulation 6.

Sur cette Figure, apparaît également le montant 7 de la carrosserie et la gouttière fixe 8 qui s'étend légèrement au-delà de celui-ci, au-dessus de la vitre 3 du pare-brise pour permettre aux balais 4 de se disposer dans le logement 10 ménagé sous la gouttière.

Le volet basculant 9 apparaît également sur la Figure et se présente ici sous la forme d'une plaquette 11, solidaire d'un ensemble formant bras de rappel 12, constitué de deux pattes transversales, fixées aux extrémités d'un axe de pivotement 13.

L'axe 13 est porté par des paliers 14 fixés aux montants 7 de la carrosserie, le basculement du volet 9 s'effectuant par pivotement de celui-ci autour de l'axe 13 entre deux positions qui seront précisées plus en détail ci-après, ce volet fermant le logement 10 sous la gouttière 8 dans un cas, notamment lorsque le balai 4 est amené à l'intérieur de ce logement, et inversement ouvrant ce même logement consécutivement à son pivotement autour de l'axe 13 pour permettre au balai de sortir de ce même logement lorsqu'il convient de mettre l'essuie glace en situation de fonctionnement pour éliminer l'eau qui ruisselle sur le pare-brise.

Les Figures 3 à 5 permettent de mieux comprendre la structure des différents éléments qui constituent le dispositif selon l'invention, ainsi que la cinématique de son fonctionnement.

Sur ces Figures, on retrouve la vitre 3 du pare-brise, munie d'un joint 3a assurant son étanchéité vis-à-vis du montant 7 de la carrosserie, et la gouttière 8, fixée à cette dernière par l'intermédiaire d'une patte de support 15 et de vis de blocage 16 par exemple, cette gouttière 8 s'étendant légèrement au-dessus et sensiblement parallèlement à la vitre 3 dans sa partie située au-delà du montant 7.

La plaquette 11 du volet basculant 9 comporte également, à une de ses extrémités, un joint à lèvre 17 venant porter contre la surface de la vitre 3 lorsque ce volet ferme le logement 10 recevant le balai d'essuie glace 4, comme représenté sur la Figure 3.

Sur la Figure 3, la plaquette 11 du volet basculant 9 est illustrée dans la position où à l'inverse, elle ouvre le logement 10 sous la gouttière 8 pour permettre la sortie du balai 4 et autoriser l'usage de l'essuie glace.

L'extrémité 18 de la plaquette 11 du volet basculant 9, opposée à celle qui porte le joint 17, est convenablement conformée pour permettre à ce volet de reposer sans effort sur la surface extérieure de la gouttière fixe 8 lors de l'ouverture du logement 10. Avantageusement, le volet basculant 9 comporte, à son extrémité 18, un joint en matériau élastomère 19 en appui sur le bord extrême de la gouttière fixe 8 lorsque le volet 9 est en position de fermeture du logement 10.

Les deux pattes qui forment le bras de rappel 12, articulé sur l'axe 13, présentent un profil en S comme illustré sur les Figures.

A une de ses extrémités, le bras de rappel 12 est solidaire de la plaquette 11 du volet basculant 9 comme déjà indiqué, afin de permettre que son pivotement autour de l'axe 13 déplace ce volet de sa position d'ouverture du logement 10 à sa position de fermeture, ou vice-versa, ainsi que représenté sur la Figure 5, respectivement en traits pleins et en traits mixtes.

Pour permettre de maintenir ce volet dans l'une ou l'autre de ces deux positions, le bras de rappel 12 est associé à un ressort en spirale 20, dont l'une des extrémités 21 est liée à la gouttière fixe 8, en position invariable, tandis que l'autre extrémité 22 est portée par le bras 12 en un point décalé latéralement sur celui-ci par rapport à l'axe d'articulation 13.

Dans ces conditions, on comprend aisément que le ressort 20 et le bras de rappel 12, par suite le volet basculant 9 solidaire de ce bras, occupent deux positions d'équilibre de part et d'autre de l'axe 13, schématisées sur la Figure 5 par les lignes en traits mixtes respectivement A et B, la ligne A correspondant à la position d'ouverture du logement 10, le volet basculant 9 étant relevé au-dessus de la gouttière 8, tandis que la ligne B correspond à la position de fermeture de ce même logement, le joint à lèvre 17 étant dans ce cas en appui sur la face extérieure de la vitre 3 du pare-brise.

Ce mouvement de basculement du volet 9 est, conformément à l'invention, directement commandé par le balai 4 de l'essuie glace qui vient appuyer sur l'extrémité du bras de rappel 12 opposée à celle qui est solidaire du volet, cette extrémité étant avantageusement munie d'un galet de butée 23, en matériau élastomère, sur lequel porte le balai 4 lorsqu'il rejoint sa position de repos pour se disposer dans le logement 10 sous la gouttière 8.

Le fonctionnement du dispositif selon l'invention se déduit aisément de ce qui précède, notamment pour comprendre comment s'effectue la commande du volet basculant sous l'action directe sur celui-ci du balai de l'essuie glace.

Lorsque le balai est appelé par les moyens de commande de l'essuie glace à fonctionner, il est entraîné dans la direction correspondant à sa sortie hors du logement 10, en venant repousser la partie en regard du volet basculant 12 qui pivote autour de son axe d'articulation 13, en relevant ce volet et en libérant le passage, notamment jusqu'à ce que le joint 19 vienne s'appuyer contre la gouttière fixe 8.

L'essuie glace peut alors normalement fonctionner, avec un angle de balayage sur la vitre 3 qui est déterminé pour être légèrement inférieur à celui atteint en position de repos, lorsque le balai 4 est disposé à l'intérieur du logement 10, ceci afin de ne pas venir actionner le volet basculant 9 et en particulier l'ouvrir et le fermer à chaque aller et retour de l'essuie glace au cours de son utilisation.

Lorsque l'essuie glace est arrêté et appelé à rejoindre sa position de repos, qui représente en pratique environ 95 % de son temps d'utilisation, l'angle de débattement du balai est légèrement augmenté, de sorte qu'il vienne en butée contre le galet 23 monté en bout du bras de rappel 12, le balai repoussant ce bras dans le sens du retour du volet basculant 9 en position initiale où il ferme à nouveau le logement 10.

Le ressort en spirale 20, grâce aux deux positions d'équilibre qu'il comporte, accompagne ce basculement du volet 9 de l'ouverture vers la fermeture ou vice-versa, en réalisant automatiquement et sous la seule commande du mouvement propre du balai 4 de l'essuie glace, la fermeture ou l'ouverture du logement sous la gouttière.

On réalise ainsi un dispositif pour cacher et protéger un balai d'essuie glace en position inactive, de conception très simple et qui permet, lorsque ce balai n'est pas utilisé, d'assurer une protection efficace vis-à-vis du gel, du vieillissement dû à l'effet des rayons ultra-violets du soleil, de la pollution et des autres causes extérieures qui sont susceptibles d'affecter ses qualités d'essuyage lorsqu'il est en permanence laissé à l'air libre.

En outre, on peut souligner qu'avec la disposition prévue selon la présente invention, le balai d'essuie glace placé dans son logement n'est plus visible de l'extérieur, ce qui permet d'améliorer l'esthétique du montant de la carrosserie dans lequel s'escamote ce balai.

Bien entendu, il va de soi que l'invention ne se limite pas à l'exemple de réalisation plus spécialement décrit et représenté ci-dessus ; elle en embrasse toutes les variantes.

Notamment, il est indifférent que le mécanisme d'essuie glace comporte un ou deux balais à mouvements alternés, chacun des montants de la carrosserie du véhicule de chaque côté du pare-brise comportant dans ce cas un logement comme dans la variante illustrée sur la Figure 1. De même, les dispositions décrites peuvent s'appliquer de façon identique, que le balai d'essuie glace soit associé au pare-brise avant du véhicule ou à sa lunette arrière.

## Revendications

1. - Dispositif pour cacher et protéger au moins un balai d'essuie glace (4) d'un véhicule automobile, placé en position de repos dans un logement (10) ménagé le long d'un montant latéral (7) de la carrosserie (1) de ce véhicule entourant la vitre (3) du pare-brise avant ou de la lunette arrière, ce logement étant délimité par une gouttière fixe (8) qui s'étend sensiblement parallèlement à la vitre à partir du montant, et comportant une ouverture comprise entre la gouttière et la vitre pour la pénétration ou la sortie du balai dans le logement, respectivement en position de repos ou de commande de l'essuie glace, **caractérisé en ce qu**'il comporte un volet basculant (9), articulé autour d'un axe fixe (13) porté par la carrosserie, pivotant entre une première position où il s'étend devant l'ouverture du logement (10) ménagé sous la gouttière (8) en isolant celui-ci de l'extérieur, et une seconde position où il se dispose approximativement parallèlement à la gouttière en libérant l'ouverture afin de laisser le libre passage au balai d'essuie glace (4) lorsque celui-ci est commandé pour assurer par oscillations successives l'essuyage de la vitre, ce volet basculant (9), soumis en permanence à l'action d'un ressort (20) qui le maintient dans l'une ou l'autre de ces deux positions, comprenant un bras de rappel (12) sur lequel agit directement le balai (4) à l'encontre du ressort (20) pour faire passer ce volet de l'une à l'autre de ces positions, respectivement lors de la sortie du balai hors du logement et de son retour dans celui-ci.

2. - Dispositif selon la revendication 1, **caractérisé en ce que** l'axe d'articulation (13) du bras de rappel (12) du volet basculant (9), porté par la carrosserie (1), s'étend parallèlement à la gouttière (8).

3. - Dispositif selon l'une des revendications 1 ou 2, **caractérisé en ce que** l'axe d'articulation (13) du bras de rappel (12) du volet basculant (9) tourillonne sur deux paliers (14) disposés aux extrémités opposées du logement (10).

4. - Dispositif selon l'une quelconque des revendications 1 à 3, **caractérisé en ce que** le bras de rappel (12), du volet basculant (9) présente un profil en S, dont une extrémité est solidaire de ce volet.

5. - Dispositif selon l'une quelconque des revendications 1 à 4, **caractérisé en ce que** le bras de rappel (12) porte à son extrémité opposée à celle qui est solidaire du volet basculant (9), un galet (23) en un matériau élastomère repoussé par le balai d'essuie glace (4) lors de son retour à l'intérieur du logement (10), le pivotement du bras de rappel (12) autour de son axe d'articulation (13) sous l'effet du ressort (20) assurant la fermeture du logement par le volet basculant (9).

6. - Dispositif selon l'une quelconque des revendications 1 à 5, **caractérisé en ce que** le volet basculant (9) comporte en bout un joint d'étanchéité à lèvre (17), propre à s'appliquer sur la vitre (3) lorsque ce volet ferme le logement (10).

7. - Dispositif selon l'une quelconque des revendications 1 à 6, **caractérisé en ce que** le ressort de rappel (20) est un ressort à spirale, dont une extrémité (21) est fixée à la gouttière (8) en un point situé à l'intérieur du logement (10) et l'autre extrémité au bras de rappel (12) en un point décalé latéralement vis-à-vis de l'axe d'articulation (13) de ce bras, de manière à créer deux positions d'équilibre pour le volet basculant (9) selon qu'il ouvre ou ferme le logement sous la poussée du balai (4).

## Claims

1. Device for concealing and protecting at least one windscreen wiper blade (4) of a motor vehicle, located in the idle position in a housing (10) fitted along a side upright (7) of the body (1) of this vehicle surrounding the glass screen (3) of the front windscreen or of the rear window, said housing being delimited by a fixed gutter (8) extending substantially parallel to the screen starting from the upright, and comprising an opening between the gutter and the screen for the entry or exit of the blade into or from the housing in the idle position or the command position of the windscreen wiper respectively, **characterised in that** it comprises a pivoting flap (9) articulated around a fixed hinge pin (13) mounted on the body, pivoting between a first position where it extends beyond the aperture of the housing (10) fitted under the gutter (8), closing off the latter from the outside, and a second position in which it is positioned approximately parallel to the gutter, leaving the aperture clear in order to allow the windscreen wiper blade (4) free movement when said windscreen wiper blade is commanded to wipe the windscreen by successive oscillations, said pivoting flap (9) being permanently subject to the action of a spring (20) which keeps it in one of these two positions, comprising a return arm (12) on which the blade acts directly (4) against the spring (20) to move the flap to one or other of these positions when the blade exits the housing and re-enters it respectively.

2. Device according to Claim 1, **characterised in that** the hinge pin (13) of the return arm (12) of the pivoting flap (9), mounted on the body (1), extends parallel to the gutter (8).

3. Device according to one of Claims 1 or 2, **characterised in that** the hinge pin (13) of the return arm (12) of the pivoting flap (9) rotates on two bearings (14) positioned at opposite ends of the housing (10).

4. Device according to any one of Claims 1 to 3, **characterised in that** the return arm (12), of the pivoting flap (9) has an S-profile, one end of which is integral to said flap.

5. Device according to any one of Claims 1 to 4, **characterised in that** the return arm (12), at the end opposite to the end which is integral to the pivoting flap (9), holds a roller (23) in an elastomer material pushed back by the windscreen wiper blade (4) when it re-enters the housing (10), the pivoting of the return arm (12) around its hinge pin (13) under the action of the spring (20) ensuring that the housing is closed by the pivoting flap (9).

6. Device according to any one of Claims 1 to 5, **characterised in that** the pivoting flap (9) comprises at the end a sealing gasket with a lip (17), to be applied to the pane (3) when this flap closes the housing (10).

7. Device according to any one of Claims 1 to 6, **characterised in that** the return spring (20) is a spiral spring, one end (21) of which is fixed to the gutter (8) at a point located inside the housing (10) and the other end to the return arm (12) at a point displaced laterally relative to the hinge pin (13) of said arm, so as to create two positions of equilibrium for the pivoting flap (9) according to whether it is opening or closing the housing under the pressure of the blade (4).

## Patentansprüche

1. Vorrichtung zum Verdecken und Schützen mindestens eines Scheibenwischerblattes (4) eines Kraftfahrzeugs, das in der Ruhestellung in einer Aufnahme (10) entlang einer die Scheibe (3) der Windschutzscheibe oder der Heckscheibe umgebenden seitlichen Säule (7) der Karosserie (1) des Fahrzeugs platziert wird, wobei die Aufnahme von einer festen Rinne (8) festgelegt wird, die sich ausgehend von der Säule im Wesentlichen parallel zur Scheibe erstreckt, und eine Öffnung zwischen der Rinne und der Scheibe aufweist, damit das Blatt in der Ruhestellung in die Aufnahme eindringen beziehungsweise diese bei Betätigung des Scheibenwischers verlassen kann, **dadurch gekennzeichnet, dass** sie eine kippbare Klappe (9) aufweist, die um eine von der Karosserie getragene, feste Achse (13) angelenkt ist und zwischen einer ersten Position, in der sie sich vor der Öffnung (10) unter der Rinne (8) erstreckt und diese nach außen hin isoliert, und einer zweiten Position verschwenkbar ist, in der sie sich in etwa parallel zur Rinne erstreckt und die Öffnung freigibt, damit das Scheibenwischerblatt (4) frei passieren kann, wenn es betätigt wird, um durch aufeinanderfolgende Hin- und Herbewegungen die Scheibe abzuwischen, wobei die kippbare Klappe (9), die ständig unter der Wirkung einer Feder (20) steht, welche sie in der einen oder anderen der beiden Positionen hält, einen Rückholarm (12) aufweist, auf den das Blatt (4) entgegen der Feder (20) direkt wirkt, um die Klappe bei seinem Verlassen der Aufnahme beziehungsweise bei seiner Rückkehr in diese von der einen in die andere Position zu bewegen.

2. Vorrichtung nach Anspruch 1, **dadurch gekennzeichnet, dass** die von der Karosserie (1) getragene Gelenkachse (13) des Rückholarms (12) der kippbaren Klappe (9) parallel zur Rinne (8) ist.

3. Vorrichtung nach einem der Ansprüche 1 oder 2, **dadurch gekennzeichnet, dass** die Gelenkachse (13) des Rückholarms (12) der kippbaren Klappe (9) auf zwei Lagern (14) ruht, die an den gegenüberliegenden Enden der Aufnahme (10) angeordnet sind.

4. Vorrichtung nach einem der Ansprüche 1 bis 3, **dadurch gekennzeichnet, dass** der Rückholarm (12) der kippbaren Klappe (9) das Profil eines S aufweist, dessen eines Ende mit der Klappe fest verbunden ist.

5. Vorrichtung nach einem der Ansprüche 1 bis 4, **dadurch gekennzeichnet, dass** der Rückholarm (12) an seinem Ende, das dem mit der kippbaren Klappe (9) verbundenen Ende gegenüberliegt, eine Rolle (23) aus Elastomermaterial trägt, die von dem Scheibenwischerblatt (4) bei seiner Rückkehr in die Aufnahme (10) zurückgeschoben wird, wobei das Verschwenken des Rückholarms (12) um seine Gelenkachse (13) unter der Wirkung der Feder (20) für das Verschließen der Aufnahme durch die kippbare Klappe (9) sorgt.

6. Vorrichtung nach einem der Ansprüche 1 bis 5, **dadurch gekennzeichnet, dass** die kippbare Klappe (9) am Ende eine Lippendichtung (17) aufweist, die an der Scheibe (3) anliegen kann, wenn die Klappe die Aufnahme (10) verschließt.

7. Vorrichtung nach einem der Ansprüche 1 bis 6, **dadurch gekennzeichnet, dass** die Rückholfeder (20) eine Spiralfeder ist, deren eines Ende (21) an der Rinne (8) in einem Punkt innerhalb der Aufnahme (10) und deren anderes Ende am Rückholarm (12) in einem gegenüber der Gelenkachse (13) des Arms seitlich versetzten Punkt befestigt ist, sodass zwei Gleichgewichtspositionen der kippbaren Klappe (9) geschaffen werden, je nachdem, ob sie die Aufnahme unter dem Schub des Blattes (4) öffnet oder verschließt.
